# EUROPÄISCHE PATENTSCHRIFT

(11) **EP 0 849 064 B1**
(45) Veröffentlichungstag und Bekanntmachung des Hinweises auf die Patenterteilung: **27.12.2000**
(21) Anmeldenummer: 97118894.1
(22) Anmeldetag: 30.10.1997
(51) Int. Cl.: B29C 47/08

(54) **Getriebe für einen Doppelschneckenextruder**
Drive for a twin-screw extruder
Transmission pour extrudeuse à deux vis

(30) Priorität: 20.12.1996 DE 19653331
(43) Veröffentlichungstag der Anmeldung: 24.06.1998
(73) Patentinhaber: A. FRIEDR. FLENDER AG, D-46395 Bocholt (DE)
(72) Erfinder: Urban, Ludger, 46419 Isselburg (DE)
(74) Vertreter: Radünz, Ingo, Dipl.-Ing.

(56) Entgegenhaltungen:
- EP-A- 0 716 914
- DE-A- 4 305 133
- DE-U- 9 311 027

## Beschreibung

Die Erfindung betrifft ein Getriebe für einen Doppelschneckenextruder mit den Merkmalen des Oberbegriffes des Patentanspruches.

Derartige Doppelschneckenextruder weisen zwei in einem geringen Abstand voneinander angeordnete, in gleicher oder in gegenläufiger Richtung rotierende Schneckenwellen auf. Als Folge davon müssen auch die Abtriebswellen des Getriebes eng nebeneinander liegen und mit gleich großem Drehmoment angetrieben werden. Das Getriebe selbst hat die Aufgabe, die Motordrehzahl zu reduzieren, das Drehmoment zu wandeln und zu verzweigen und die Axialkräfte aus dem Extruderprozeß aufzunehmen.

Bei einem bekannten Getriebe (EP-A-0 716 914) ist das Getriebegehäuse durch eine vertikale Teilfuge in eine antriebsseitige Gehäusehälfte und eine abtriebsseitige Gehäusehälfte aufgeteilt. In der antriebsseitigen Gehäusehälfte sind zusätzlich zu der Übersetzung die antriebsseitigen Enden der Verteilerwellen angeordnet. Auf diese Weise können das Getriebe und das Getriebegehäuse verkürzt werden. Zur Erleichterung der Montage des Getriebes ist das Gehäuse jeweils in der Höhe der Wellenebenen in Längsrichtung der Wellen geteilt, wobei das antriebsseitige Teilgehäuse zwei und das abtriebsseitige Teilgehäuse drei horizontale Teilebenen enthält. Mit der Anzahl der Teilfugen erhöht sich der Bearbeitungsaufwand für die Herstellung des Getriebehäuses und verringert sich die Genauigkeit des Getriebes.

Bei einem anderen bekannten Getriebe (DE-A-4 305 133) für einen Doppelwellenextruder ist das Getriebegehäuse ebenfalls durch eine vertikale Teilfuge in eine antriebsseitige Gehäusehälfte und in eine abtriebsseitige Gehäusehälfte aufgeteilt. In der antriebsseitigen Gehäusehälfte ist die Übersetzungsstufe mit der Antriebswelle und der ersten Teilwelle der mehrteiligen ersten Abtriebswelle angeordnet. Die abtriebsseitige Gehäusehälfte, die die Verteilerstufe aufnimmt, ist durch eine weitere vertikale Teilfuge in zwei Teilgehäuse aufgeteilt. Diese Teilfuge verläuft in Längsrichtung der zweiten Abtriebswelle. Dabei sind die zweite Abtriebswelle und die Verteilerwellen in beiden Teilgehäusen beiderseits der genannten Teilfuge vorgesehen, während die übrigen Teilwellen der ersten Abtriebswelle in einem der durch diese Teilfuge entstandenen Gehäuseteilen angeordnet sind.

Zwar sind bei dem Getriebe gemäß der DE-A-4 305 133_im Vergleich zu dem Getriebe gemäß der EP-A-0 716 914 die horizontalen Teilfugen entfallen, dennoch sind mehrere Teilfugen vorhanden, die den Bearbeitungsaufwand für die Herstellung des Getriebehäuses erhöhen und die Genauigkeit des Getriebes verringern.

Der Erfindung liegt die Aufgabe zugrunde, das gattungsgemäße Getriebegehäuse so zu gestalten, daß die Genauigkeit des Getriebes erhöht wird.

Diese Aufgabe wird bei einem gattungsgemäßen Getriebe erfindungsgemäß durch die kennzeichnenden Merkmale des Patentanspruches gelöst.

Durch die Verlegung der vertikalen Teilfuge in Längsrichtung der zweiten Abtriebswelle und die Einbeziehung der Antriebswelle und aller Teilwellen der ersten Abtriebswelle in das so geteilte Getriebehäuse gelingt es, mit einer einzigen Teilfuge auszukommen. Hierdurch wird die Anzahl der zu bearbeitenden Flanschflächen an dem Gehäuse verringert. Damit wird die Anzahl der Bearbeitungsfehler verringert und dadurch die Genauigkeit des Getriebes erhöht. Das erfindungsgemäße Getriebegehäuse setzt allerdings voraus, daß die Komponenten, die auf den innerhalb der Teilgehäuse liegenden Wellen angeordnet sind, durch eine Steckmontage eingebaut werden können. Diese Voraussetzung ist bei dem erfindungsgemäßen Getriebe erfüllt.

Ein Ausführungsbeispiel der Erfindung ist in der Zeichnung dargestellt und wird im folgenden näher erläutert. Es zeigen
Fig. 1 die Seitenansicht eines Getriebes und
Fig. 2 den Schnitt II-II nach Fig. 1.

Das dargestellte Getriebe ist für einen Doppelschneckenextruder bestimmt. Es ist in einem Gehäuse 1 untergebracht und weist eine Antriebswelle 2 auf, die ein Antriebsritzel 3 trägt. Das Antriebsritzel 3 steht mit einem Zahnrad 4 in Eingriff, das auf einer ersten Abtriebswelle 5 drehfest angeordnet ist. Die erste Abtriebswelle 5 besteht im vorliegenden Fall aus drei miteinander drehfest verbundenen Teilwellen 5.1, 5.2, 5.3, von denen die antriebsseitige Teilwelle 5.1 über zwei Radiallager 6 in dem Gehäuse 1 gelagert ist. Die dritte Teilwelle 5.3 der ersten Abtriebswelle 5 ist auf der Abtriebsseite durch das Gehäuse 1 hindurchgeführt und außerhalb des Gehäuses 1 mit einer der Schneckenwellen des nicht gezeigten Doppelschneckenextruders verbunden.

Ein zweites drehfest auf der zweiten Teilwelle 5.2 der ersten Abtriebswelle 5 angeordnetes Zahnrad 7 steht mit zwei Zahnrädern 8 in Eingriff, von denen jeweils eines auf dem antriebsseitigen Ende von zwei Verteilerwellen 9 angeordnet ist. Die antriebsseitigen Enden der Verteilerwellen 9 sind beiderseits des Zahnrades 8 in Radiallagern 10 gelagert. Die Verteilerwellen 9 liegen oberhalb und unterhalb einer zweiten Abtriebswelle 11. Die abtriebsseitigen Enden der Verteilerwellen 9 sind in Radiallagern 12 gelagert. Die Verteilerwellen 9 tragen jeweils ein zweites Zahnrad 13, das mit einem drehfest auf der zweiten Abtriebswelle 11 angeordneten Zahnrad 14 in Eingriff steht.

Die zweite Abtriebswelle 11 ist innerhalb des Gehäuses 1 in zwei Radiallagern 15 und einem Axiallager 16 gelagert. Das Axiallager 16 ist als Tandem- oder Mehrfachlager ausgebildet. Das aus dem Gehäuse 1 herausragenden Ende der zweiten Abtriebswelle 11 ist mit der zweiten Schneckenwelle des Doppelschneckenextruders verbunden.

Die erste Teilwelle 5.1 der ersten Abtriebswelle 5 ist durch ein Axiallager 17 in dem Gehäuse 1 abgestützt. Dieses Axiallager 17 kann als Einfachlager oder als Tandem- bzw. Mehrfachlager ausgebildet sein.

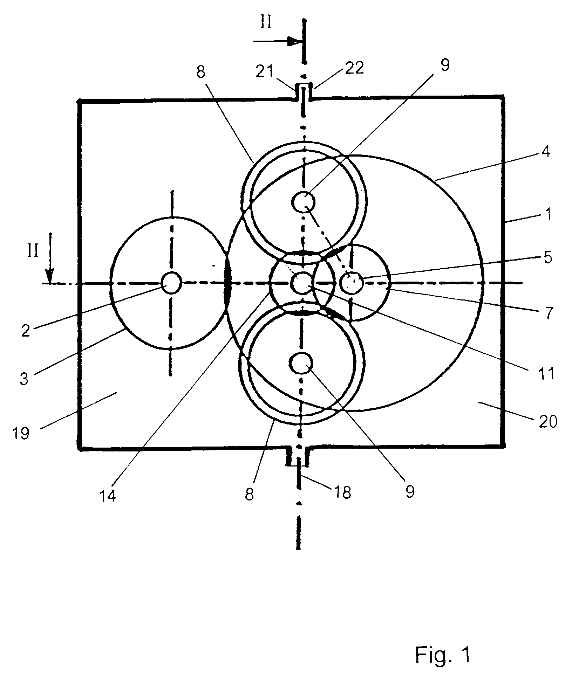

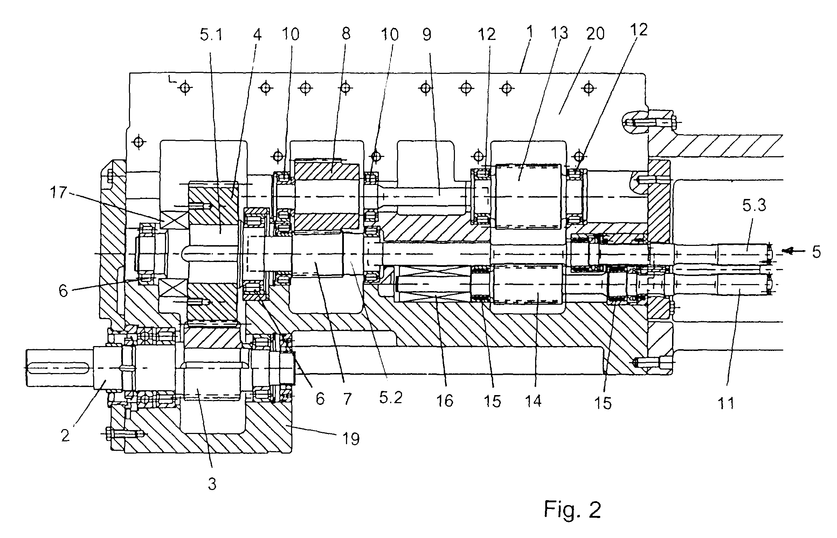

In der Fig. 2 sind abweichend von der Darstellung in Fig. 1 die zweite Abtriebswelle 11, die Verteilerwellen 9 und die Antriebswelle 2 versetzt zu den übrigen Wellen gezeichnet.

Das Gehäuse 1 des Getriebes ist durch eine Teilfuge 18 in zwei Gehäusehälften 19, 20 aufgeteilt. Diese Teilfuge 18 ist vertikal angeordnet und verläuft in Längsrichtung der zweiten Abtriebswelle 11. Die beiden Gehäusehälften 19, 20 sind jeweils mit einem Flansch 21, 22 versehen und über Schrauben, die die Flansche 21, 22 durchdringen lösbar miteinander verbunden. Die aneinander anliegenden Flächen der Flansche 21, 22 sind bearbeitet.

Im Verlauf der vertikalen Teilfuge 18 sind die zweite Abtriebswelle 11 und die Verteilerwellen 9 jeweils zur Hälfte in einer der Gehäusehälften 19, 20 angeordnet. Die erste Abtriebswelle 5 ist in der einen Gehäusehälfte 20 und die Antriebswelle 2 ist in der anderen Gehäusehälfte 19 angeordnet. Die von der ersten Abtriebswelle 5 und die von der Antriebswelle 2 getragenen Komponenten, das sind die Lager 6 und die Zahnräder 4, 7, 3 werden bei der Montage auf diese Wellen 5, 2 gesteckt.

## Patentansprüche

1. Getriebe für einen Doppelschneckenextruder mit einem Gehäuse (1) zur Aufnahme einer ersten, aus mehreren Teilwellen (5.1, 5.2, 5.3) bestehenden Abtriebswelle (5), die über ein Übersetzungsgetriebe angetrieben ist, und mit einer zweiten Abtriebswelle (11), die über die erste Abtriebswelle (5) und zwei beidseitig angeordnete Verteilerwellen (9) angetrieben ist, wobei das Gehäuse (1) entlang einer vertikalen Teilfuge (18) in unmittelbar miteinander verbundene Teilgehäuse (19, 20) geteilt ist, wobei die Teilfuge in Richtung der Längsachse der zweiten Abtriebswelle (11) verläuft und wobei die zweite Abtriebswelle (11) und die Verteilerwellen (9) in der Teilfuge (18) und einige der Teilwellen (5.2, 5.3) der ersten Abtriebswelle (5) in dem einen Teilgehäuse (20) angeordnet sind, dadurch gekennzeichnet, daß eine einzige Teilfuge (18) vorgesehen ist, und daß alle Teilwellen (5.1, 5.2, 5.3) der ersten Abtriebswelle (5) in dem einen Teilgehäuse (20) und die Antriebswelle (2) in der anderen Teilgehäuse (19) angeordnet sind.

## Claims

1. Transmission for a double worm extruder, with a housing (1) for receiving a first, driven shaft (5), which consists of several part shafts (5.1, 5.2, 5.3) and which is driven by way of a speed change transmission, and with a second driven shaft (11), which is driven by way of the first driven shaft (5) and two distributor shafts (9) arranged on either side, wherein the housing (1) is divided along a vertical separating join (18) into part housings (19, 20) directly connected together, wherein the separating join extends in the direction of the longitudinal axis of the second driven shaft (11) and wherein the second driven shaft (11) and the distributor shafts (9) are arranged in the separating join (18) and some of the part shafts (5.2, 5.3) of the first driven shaft (5) are arranged in the one part housing (20), characterised in that a single separating join (18) is provided and that all part shafts (5.1, 5.2, 5.3) of the first driven shaft (5) are arranged in the one part housing (20) and the drive shaft (2) is arranged in the other part housing (19).

## Revendications

1. L'invention concerne un mécanisme pour boudineuse à deux vis, qui comprend un carter (1 ) prévu pour loger un premier arbre de sortie (5) composé de plusieurs arbres partiels (5.1, 5.2, 5.3), qui est actionné par l'intermédiaire d'un démultiplicateur, ainsi qu'un second arbre de sortie (11) actionné par l'intermédiaire du premier arbre de sortie (5) et de deux arbres de transfert (9) disposés de part et d'autre. Le carter (1) est reparti le long d'un joint vertical (18) en carters partiels solidarisés directement. Ledit joint s'étend en direction de l'axe longitudinal du second arbre de sortie (11). Ledit second arbre de sortie (11) et les arbres de transfert (9) sont montés dans le joint (18) et certains arbres partiels (5.2, 5.3) du premier arbre de sortie (5) sont montés dans un carter partiel (20). Ce mécanisme se caractérise en ce que tous les arbres de sortie (5) sont montés dans un carter partiel (20) et en ce que l'arbre primaire (2) est monté dans l'autre carter partiel (19).
